# EUROPÄISCHE PATENTSCHRIFT

(11) **EP 3 449 226 B1**
(45) Veröffentlichungstag und Bekanntmachung des Hinweises auf die Patenterteilung: **16.12.2020**
(21) Anmeldenummer: 17712742.0
(22) Anmeldetag: 20.03.2017
(51) Int. Cl.: G01F 23/26

(54) **KOPPELELEMENT FÜR EIN KAPAZITIVES FÜLLSTANSDMESGERÄT**
COUPLING ELEMENT FOR A CAPACITIVE FILL-LEVEL MEASURING APPARATUS
ÉLÉMENT DE COUPLAGE POUR UN APPAREIL DE MESURE DE NIVEAU DE REMPLISSAGE CAPACITIF

(30) Priorität: 29.04.2016 DE 102016107970
(43) Veröffentlichungstag der Anmeldung: 06.03.2019
(73) Patentinhaber: Endress+Hauser SE+Co. KG, 79689 Maulburg (DE)
(72) Erfinder: WERNET, Armin, 79618 Rheinfelden (DE); BECHTEL, Gerd, 79585 Steinen (DE); UPPENKAMP, Kaj, 79664 Wehr (DE)
(74) Vertreter: Andres, Angelika Maria
(86) Internationale Anmeldenummer: PCT/EP2017/056560
(87) Internationale Veröffentlichungsnummer: WO 2017/186406

(56) Entgegenhaltungen:
- DE-A1-102004 008 125
- DE-U1- 20 313 695
- JP-A- H0 626 907
- US-A1- 2011 199 103
- US-A1- 2013 026 084

## Beschreibung

Die vorliegende Erfindung betrifft eine Vorrichtung zur kapazitiven Bestimmung und/oder Überwachung zumindest einer Prozessgröße eines Mediums in einem Behälter. Bei der Prozessgröße handelt es sich beispielsweise um einen Füllstand des Mediums in dem Behälter, um die elektrische Leitfähigkeit des Mediums oder auch um die Permittivität des Mediums. Im Falle einer Füllstandsmessung kann es sich sowohl um eine kontinuierliche Füllstandsbestimmung als auch um das Erkennen eines vorgebbaren Grenzstands handeln.

Auf dem kapazitiven Messprinzip beruhende Feldgeräte sind an sich aus dem Stand der Technik bekannt und werden von der Anmelderin in vielen unterschiedlichen Ausgestaltungen hergestellt und beispielsweise unter den Bezeichnungen Liquicap, Solicap oder Liquipoint vertrieben.

Kapazitive Füllstandsmessgeräte weisen in der Regel eine im Wesentlichen zylindrische Sensoreinheit mit zumindest einer Sensorelektrode auf, welche zumindest teilweise in einen Behälter einbringbar ist. Einerseits sind, insbesondere zur kontinuierlichen Füllstandsmessung, vertikal in den Behälter hineinreichende stabförmige Sensoreinheiten weitverbreitet. Zur Erkennung eines Grenzstandes sind jedoch auch in die Seitenbewandung eines jeweiligen Behälters einbringbare Sensoreinheiten bekannt geworden. Ein solches Füllstandmessgerät ist in Dokument US 2011/199103 A1 offenbart.

Zur Vermeidung von Ansatzbildung an der Sensorelektrode wird unabhängig von der Ausgestaltung der Sensorelektrode häufig eine Zusatzelektrode, insbesondere eine sogenannte Guardelektrode, verwendet, wie beispielsweise in der DE 32 12 434 C2 beschrieben. Die Guardelektrode ist koaxial um die jeweilige Sensorelektrode angeordnet, und von dieser durch eine Isolierung elektrisch getrennt. Sie liegt ferner auf dem gleichen Potential wie die Sensorelektrode.

Während des Messbetriebs wird die Sensoreinheit mit einem Anregesignal, in der Regel in Form eines Wechselstromsignals, beaufschlagt. Aus dem von der Sensoreinheit empfangenen Antwortsignal kann anschließend der Füllstand bestimmt werden. Dieser ist abhängig von der Kapazität des von der Sensorelektrode und der Wandung des Behälters, oder des von der Sensorelektrode und einer zweiten Elektrode gebildeten Kondensators. Je nach Leitfähigkeit des Mediums bildet entweder das Medium selbst oder eine Isolierung der Sensorelektrode das Dielektrikum dieses Kondensators.

Zur Auswertung des von der Sensoreinheit empfangenen Antwortsignals in Bezug auf den Füllstand kann entweder die sogenannte Scheinstrommessung oder auch die Admittanzmessung durchgeführt werden. Bei einer Scheinstrommessung wird der Betrag des durch die Sensoreinheit fließenden Scheinstroms gemessen. Da der Scheinstrom jedoch an sich einen Wirk- und einem Blindanteil aufweist, wird im Falle einer Admittanzmessung neben dem Scheinstrom der Phasenwinkel zwischen dem Scheinstrom und der an der Sensoreinheit anliegenden Spannung gemessen. Die zusätzliche Bestimmung des Phasenwinkels erlaubt es darüber hinaus, Aussagen über eine mögliche Ansatzbildung zu treffen, wie beispielsweise aus der DE102004008125A1 bekannt geworden ist.

Zur Wahl der Frequenz des Anregesignals sind verschiedene Faktoren zu berücksichtigen. Zum einen gilt, dass die Frequenz der angelegten Wechselspannung auf Grund von Resonanzeffekten umso geringer zu wählen ist, je länger die Sensoreinheit ausgestaltet ist. Auf der anderen Seite verringert sich jedoch grundsätzlich für alle Sensoreinheiten der Einfluss einer Ansatzbildung mit zunehmender Frequenz. Hinzu kommen unter anderem noch Einflüsse der elektrischen Leitfähigkeit des jeweiligen Mediums.

Aus dem Stand der Technik sind Feldgeräte bekannt, welche sich nur zum Betrieb bei einer oder wenigen ausgewählten konstanten Frequenzen eignen, welche gemäß dem Bestreben nach dem besten Kompromiss in Bezug auf die oben genannten gegenläufigen Tendenzen gewählt wird/werden. Ferner ist aus der DE102011003158A1 bekannt geworden, die Sensoreinheit mit einem Anregesignal variabler Frequenz in Form eines Frequenz-Sweeps zu beaufschlagen und aus den zu den unterschiedlichen Frequenzen gehörenden Antwortsignalen die für die jeweilige Anwendung (Medium, Ausgestaltung der Sensoreinheit, etc) optimale Frequenz auszuwählen.

Neben der Wahl einer geeigneten Frequenz für das Anregesignal sind für kapazitiv arbeitende Feldgeräte verschiedene Überlegungen in Bezug auf das von der Sensoreinheit empfangenen Antwortsignal, in der Regel ebenfalls in Form eines Wechselstromsignals, erforderlich. Das Messprinzip bedingt das Fließen eines elektrischen Wechselstroms von einer Elektronikeinheit des Feldgeräts zur Sensoreinheit und von der Sensoreinheit über das jeweilige Medium zurück zur Elektronikeinheit. Die so entstehende Stromschleife kann je nach Ausgestaltung anfällig für einkoppelnde Störsignale, was sich gegebenenfalls negativ auf die jeweilige Messgenauigkeit auswirken kann. Zudem kann es, bedingt durch die Stromschleife, auch zu Emissionen elektromagnetischer Wellen durch das Feldgerät kommen, was sich wiederum nachteilig auf die die elektromagnetische Verträglichkeit des Geräts auswirkt.

In vielen Fällen wird der elektrische Strom über einen Prozessanschluss des Gehäuses sowie über das Gehäuse zurück zur Elektronikeinheit geführt. Weiterhin sind separate Kontaktierungen verbreitet, welche den Weg des Stromsignals gegenüber dem erstgenannten Fall verkürzen und somit sowohl die Möglichkeiten für das Einkoppeln von Störsignalen reduzieren und darüber hinaus die elektromagnetische Verträglichkeit des Feldgeräts erhöhen. Gängige Kontaktierungen zwischen der Elektronikeinheit und dem Gehäuse sind beispielsweise gegeben durch Steckkontakte, Lötverbindungen oder auch Schleifkontakte. Derartige Kontaktierungen sind jedoch oft, insbesondere bei hohen Anforderungen an die Stabilität und Langlebigkeit der Kontaktierung, nur mit verhältnismäßig großem Aufwand realisierbar. Bei Lötverbindungen wächst beispielsweise der Aufwand mit zunehmender Miniaturisierung in den zunehmend beengten Verhältnissen der jeweiligen Komponenten. Eine weitere Problematik in Bezug auf Langlebigkeit und Stabilität der Verbindung ergibt sich ferner in dem Falle, dass die einzelnen sich innerhalb des Gehäuses des Feldgeräts befindlichen Komponenten vergossen werden. Beispielsweise kann es bei Schleifkontakten mit zunehmender Zeit zu einem Abrieb kommen. Bei Steckkontakten wiederum können, insbesondere bedingt durch die punktuelle Kontaktierung, durch das Vergießen und das nachträgliche Arbeiten und Fließen der Vergussmasse, Kräfte auf die jeweilige Kontaktstelle einwirken, die den Kontakt beeinträchtigen oder gegebenenfalls sogar aufbrechen.

Der vorliegenden Erfindung liegt die Aufgabe zugrunde, eine einfache, zuverlässige und langzeitstabile Kontaktierung zwischen dem Gehäuse und der Elektronikeinheit eines kapazitiven Feldgeräts bereitzustellen.

Diese erfindungsgemäße Aufgabe wird gelöst durch eine Vorrichtung zur kapazitiven Bestimmung und/oder Überwachung eines Füllstandes, einer elektrischen Leitfähigkeit oder einer Permittivität eines Mediums in einem Behälter, umfassend zumindest eine Sensoreinheit mit zumindest einer Sensorelektrode, ein Gehäuse und eine Elektronikeinheit,wobei die Elektronikeinheit dazu ausgestaltet ist,- die Sensoreinheit mit einem hochfrequenten Anregesignal zu beaufschlagen,-von der Sensoreinheit ein Antwortsignal zu empfangen, und- zumindest aus dem Antwortsignal eine Aussage über den Füllstand des Mediums in dem Behälter zu treffen, wobei ein Koppelelement vorgesehen ist, welches derart angeordnet und dazu ausgestaltet ist, eine leitfähige Verbindung zwischen zumindest einem Teilbereich des Gehäuses und zumindest einer Komponente der Elektronikeinheit in Form eines elektrischen Kontakts herzustellen, oder im Falle, dass der elektrische Kontakt beeinträchtigt oder aufgebrochen ist, eine kapazitive Kopplung zwischen den beiden Komponenten zu bewirken, derart dass die beiden Komponenten zumindest teilweise ein Kondensatorelement ausbilden, wobei das Koppelelement lösbar im Gehäuse befestigbar ist, wobei das Koppelelement und das Gehäuse zumindest jeweils in einem Koppelbereich so ausgestaltet sind, dass die Geometrien zumindest in diesen Koppelbereichen aneinander angepasst, insbesondere komplementär zueinander, sind, und wobei das Koppelelement passgenau in das Gehäuse einbringbar ist derart, dass sich die Koppelbereiche zur Herstellung der leitfähigen Verbindung berühren.

Das Koppelelement sorgt für einen elektrischen Kontakt zwischen den beiden Komponenten des Gehäuses und der Elektronikeinheit. Andernfalls besteht zumindest noch eine kapazitive Kopplung. Zumindest ein Teilbereich des Koppelelements und zumindest eines Teilbereichs zumindest einer der beiden Komponenten bilden in diesem Falle also ein Kondensatorelement aus. Somit kann zu jedem Zeitpunkt ein Fließen des jeweiligen Stromsignals entlang einer vorgegebenen Stromschleife über das Koppelelement gewährleistet werden. Die vielfältigen zuvor skizzierten möglichen Ursachen für eine Beeinträchtigung einer elektrischen Kontaktierung sind durch die Verwendung eines erfindungsgemäßen Koppelelements also irrelevant.

Das Ziel der vorliegenden Erfindung besteht im Wesentlichen darin, eine robuste stabile und gleichzeitig durch einen einfachen Aufbau gekennzeichnete Kontaktierung bereitzustellen. Insbesondere kann ferner gewährleistet werden, dass die vom jeweiligen Stromsignal durchlaufene Stromschleife möglichst kurz ist. Wenn der elektrische Kontakt vermittels der Kontaktierungseinheit beeinträchtigt oder aufgebrochen wird, besteht immer noch eine kapazitive Kopplung. Da die kapazitive Kopplung ferner grundsätzlich mit der Frequenz des jeweiligen Stromsignals wächst, bedingt die für die vorliegende Erfindung vorgesehene Verwendung eines hochfrequenten Anregesignals stets, dass die Kopplung zur Aufrechterhaltung der kurzen Stromschleife ausreichend ist.

Das erfindungsgemäße Koppelelement ist lösbar im Gehäuse befestigbar. Es ist insbesondere formschlüssig am oder im Gehäuse befestigbar.

Erfindungsgemäß sind zumindest das Koppelelement und das Gehäuse zumindest jeweils in einem Koppelbereich so ausgestaltet, dass die Geometrien zumindest in diesen Koppelbereichen aneinander angepasst, insbesondere komplementär zueinander, sind.

In einer weiteren bevorzugten Ausgestaltung bilden das Koppelelement und das Gehäuse zumindest in den beiden Koppelbereichen zumindest zeitweise einen elektrisch leitfähigen Kontakt und zumindest zeitweise ein Kondensatorelement aus. Der elektrische Kontakt kann dabei entweder ein punktueller Kontakt, ein linienförmiger Kontakt oder auch ein flächiger Kontakt sein.

Im Falle, dass das Gehäuse beispielsweise zumindest in einem Teilbereich eine planare Oberfläche aufweist, weist das Koppelelement beispielsweise ebenfalls eine planare Oberfläche auf und ist so ausgestaltet, dass sich die beiden planaren Oberflächen im Falle, dass das Koppelelement am oder im Gehäuse befestigt ist, gegenüber liegen und zumindest zeitweise und teilweise berühren. Zwischen dem Koppelelement und dem Gehäuse besteht also zeitweise eine konduktive Verbindung und zeitweise eine kapazitive Kopplung. Ist der elektrische Kontakt, welcher durch die Berührung der beiden Koppelfbereiche bewirkt wird, nicht mehr vorhanden, so bilden die beiden Koppelbereiche jedoch noch ein Kondensatorelement in Form eines Plattenkondensators aus und bewirken eine kapazitive Kopplung. Die Größe der kapazitiven Kopplung hängt also auch von der Fläche der beiden Koppelbereiche ab.

Allgemein gesprochen ist die Geometrie und Dimensionierung des Koppelelements grundsätzlich einerseits an die Geometrie des Gehäuses und/oder der Elektronikeinheit zumindest in jenem Teilabschnitt/jenen Teilabschnitten angepasst, in welchem jeweils eine Kontaktierung vorgenommen werden soll. Die kapazitive Kopplung selbst hängt aber ferner von den beiden Koppelbereichen, insbesondere von deren Abstand zueinander während der Kopplung und vom Flächeninhalt der beiden einander zugewandten Oberflächen ab, da insbesondere durch die beiden Koppelbereiche das jeweilige Kondensatorelement definiert wird.

Für die Kontaktierung bzw. Kopplung zwischen dem Koppelelement und der Elektronikeinheit sind unterschiedlichste Ausgestaltungen denkbar, welche alle unter die vorliegende Erfindung fallen. Grundsätzlich gelten die gleichen Überlegungen wie für die Kontaktierung bzw. Kopplung zwischen dem Koppelelement und dem Gehäuse. Jedoch ist es in vielen Fällen ausreichend, wenn das Koppelelement entweder mit dem Gehäuse oder mit der Elektronikeinheit eine elektrische Verbindung und kapazitive Kopplung aufweist. Die jeweils zweite Verbindung kann auch rein konduktiv ausgeführt sein.

Eine Ausgestaltung der erfindungsgemäßen Vorrichtung sieht vor, dass die beiden Koppelbereiche so dimensioniert sind, dass im Falle der kapazitiven Kopplung der Blindwiderstand des Koppelelements klein im Vergleich zur Impedanz des Mediums und/oder der Impedanz einer Isolation der Sensoreinheit ist. Der Blindwiderstand des Koppelelements ist in Reihe zur Impedanz des Mediums geschaltet. Ein möglichst kleiner Blindwiderstand ermöglicht entsprechend eine möglichst effiziente Signalübertragung.

In einer weiteren erfindungsgemäßen Ausgestaltung sind der Koppelbereich des Gehäuses und der Koppelbereich des Koppelelements im Wesentlichen zylinderförmig ausgestaltet, wobei zumindest der Koppelbereich des Koppelelements lösbar innerhalb des Gehäuses einbringbar ist derart, dass die dem Gehäuseinneren zugewandte Oberfläche des Koppelbereichs des Gehäuses die dem Gehäuseinneren zugewandte Oberfläche des Koppelbereich des Koppelelements zumindest teilweise und zeitweise berührt. Das Gehäuse weist also zumindest einen zylinderförmigen Teilabschnitt auf, innerhalb welchem das ebenfalls zylinderförmig ausgestaltete Koppelelement eingebracht werden kann. Die Radien des zylinderförmigen Teilabschnitts des Gehäuses und des Teilabschnitts des Koppelelements sind dabei so aneinander angepasst, dass das Koppelelement derart innerhalb des Gehäuses befestigt werden kann, dass das Gehäuse und das Koppelelement sich in den zwei Koppelbereichen, welche jeweils zumindest einen Ausschnitt der zylinderförmigen Teilabschnitte umfassen, zumindest teilweise und zeitweise berühren.

In einer weiteren Ausgestaltung der erfindungsgemäßen Vorrichtung weist das Koppelelement eine Kontaktierungseinheit auf, mittels welcher eine, insbesondere lösbare, elektrische Verbindung zwischen dem Koppelelement und der Komponente der Elektronikeinheit herstellbar ist. In diesem Fall besteht also eine konduktive Verbindung zwischen dem Koppelelement und der Elektronikeinheit, insbesondere einer Leiterplatte der Elektronikeinheit.

Dabei ist es von Vorteil, wenn die Kontaktierungseinheit mit der Komponente der Elektronikeinheit mittels einer Steck-, Löt- oder Pressverbindung elektrisch kontaktiert ist.

Beispielsweise kann die Kontaktierungseinheit zumindest einen Kontaktstreifen, einen Kontaktflügel, eine Kontaktlasche, einen Kontaktstift oder auch eine Kontaktfeder aufweisen.

In einer weiteren Ausgestaltung ist das Koppelelement aus einem elektrisch leitfähigen Material, insbesondere Kupfer, Zinn, Silber, Gold oder eine Legierung aus zumindest zwei dieser Elemente, wie zum Beispiel Messing, hergestellt.

Es ist von Vorteil, wenn die zumindest eine Komponente der Elektronikeinheit eine Leiterplatte ist. Der Koppelbereich des Koppelements kann beispielsweise zumindest teilweise um die Leiterplatte herum innerhalb des Gehäuses angeordnet sein.

In einer bevorzugten Ausgestaltung weist das Gehäuse einen Prozessadapter auf, mittels welchem die Vorrichtung an oder auf dem Behälter befestigbar ist, und welcher Prozessadapter zumindest teilweise mit dem Medium und/oder mit dem Behälter in elektrischem Kontakt ist, wenn die Vorrichtung an oder auf dem Behälter befestigt ist. Der Behälter, in welchem sich das Medium befindet kann dabei entweder aus einem elektrisch leitfähigen oder auch einem elektrisch isolierenden Material hergestellt sein. Zumindest der Prozessadapter sollte aber in der Regel aus einem elektrisch leitfähigen Material gefertigt sein.

In einer weiteren Ausgestaltung umfasst die Sensoreinheit zumindest zwei Elektroden.

Beispielsweise handelt es sich bei den zwei Elektroden um eine Sensorelektrode und um eine Guardelektrode.

Bei der Prozessgröße handelt es sich um einen Füllstand des Mediums in dem Behälter, insb. um einen vorgebbaren Füllstand, um die elektrische Leitfähigkeit des Mediums, oder um die Permittivität des Mediums.

Die Erfindung wird nun anhand der nachfolgenden Figuren Fig. 1 bis Fig. 3 genauer beschrieben. Es zeigt:
Fig. 1 eine schematische Darstellung eines kapazitiven Füllstandsmessgeräts (a) gemäß Stand der Technik und (b) gemäß der vorliegenden Erfindung,
Fig. 2 eine schematische Zeichnung zweier kapazitiver Füllstandsmessgeräte mit eingezeichneten Stromschleifen für das Anregesignal und Antwortsingal (a) ohne Koppelelement und (b) mit erfindungsgemäßen Koppelelement, und
Fig. 3 (a) eine Schnittdarstellung eines kapazitiven Füllstandsmessgeräts mit einem Koppelelement und (b) eine mögliche Ausgestaltung eines Koppelelement in perspektivischer Ansicht.

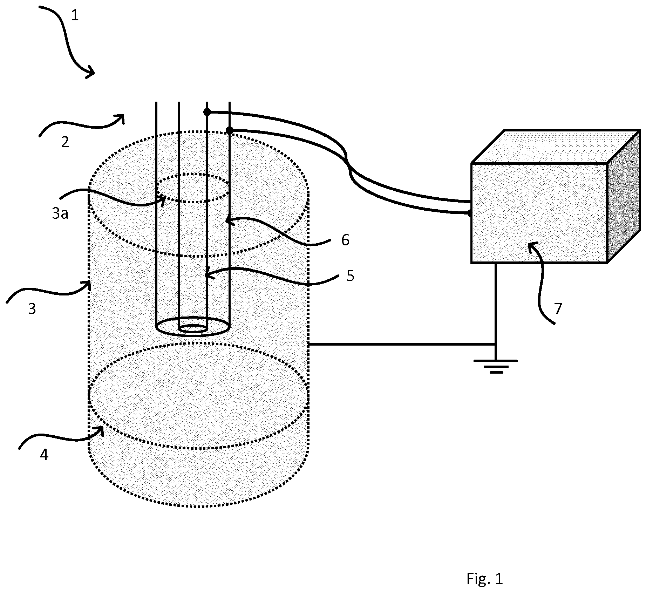

In Fig. 1 ist eine schematische Zeichnung eines typischen auf dem kapazitiven Messprinzip beruhenden Feldgeräts 1 gemäß Stand der Technik gezeigt. Das Beispiel zeigt eine Sensoreinheit 2 mit zwei zylinderförmig ausgestalteten Elektroden 5, 6, welche von der über einen Prozessanschluss 3a von der Oberseite ausgehend in einen teilweise mit Medium 4 gefüllten Behälter 3 hineinragt. Es versteht sich jedoch von selbst, dass auch frontbündige Sensoreinheiten, welche im Wesentlichen mit der Bewandung des Behälters 3 abschließen oder solche Sensoreinheiten, welche über eine Seitenbewandung des Behälters 3 in diesen eingebracht werden, möglich sind.

Die Sensoreinheit 2 selbst setzt sich im vorliegenden Beispiel aus einer Sensorelektrode 5 und einer die Sensorelektrode 5 koaxial umgebenden und von dieser isolierten Guardelektrode 6 zusammen. Beide Elektroden 5,6 sind elektrisch mit einer Elektronikeinheit 7 verbunden, welche zur Signalerfassung, -auswertung und/oder -speisung verantwortlich ist. Insbesondere bestimmt und/oder überwacht die Elektronikeinheit 7 anhand des von der Sensoreinheit 2 empfangenen Antwortsignals den Füllstand des Mediums 4 im Behälter 3.

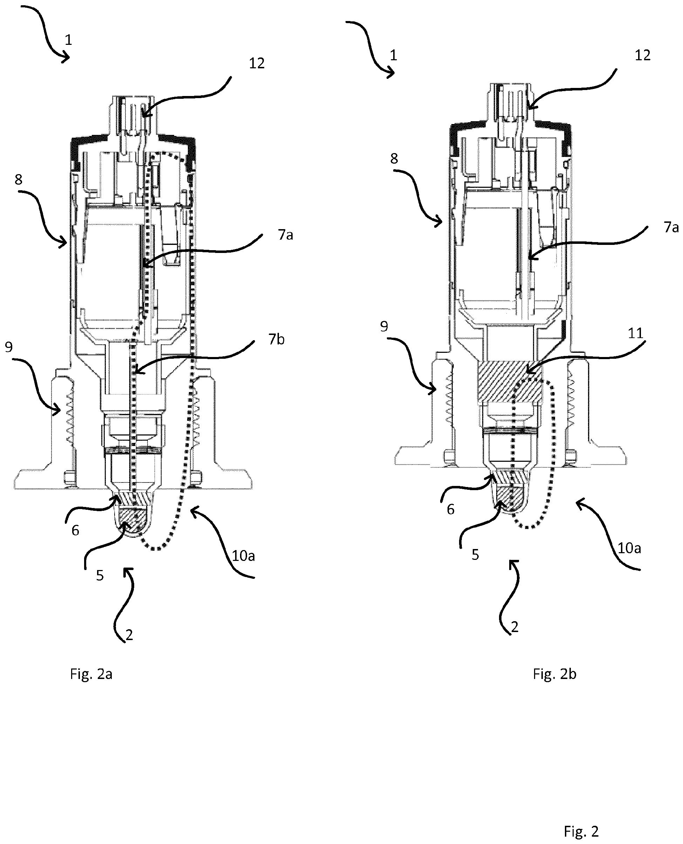

In Fig. 2a ist ebenfalls ein kapazitives Füllstandsmessgerät 1mit einer Sensoreinheit 2 gezeigt, welche eine Sensorelektrode 5, und eine Guardelektrode 6 umfasst. Die Guardelektrode 6 ist von der Sensorelektrode 5 elektrisch vollständig isoliert und dient der Kompensation von Ansatzbildung. Die Guardelektrode 6 wird dabei bevorzugt, wie beispielsweise in der DE 32 12 434 C2 beschrieben, auf dem gleichen Potential wie die Sensorelektrode 5 betrieben.

Das Gehäuse 8 weist einen Prozessadapter 9 zum Anschluss des Geräts 1 an einen Prozessanschluss eines Behälters 3 auf, welcher zumindest teilweise mit einem Medium 4 gefüllt ist. Das Messgerät 1 wird über die Versorgungsleitungen 12 mit elektrischer Energie versorgt. Gegebenenfalls kann ferner eine Kommunikation mit einer übergeordneten Einheit, wie beispielsweise einem Prozessleitsystem oder einem Computer [nicht gezeigt] mittels der Versorgungsleitungen 12 vorgenommen werden, wie beispielweise eine Übertragung von Messsignalen, Parameterdaten oder ähnlichem.

Das Anregesignal in Form eines Wechselstromsignals fließt bei der Ausgestaltung gemäß Fig. 2a entlang der Stromschleife 10a entlang eines großen Bereichs des Gehäuses 8 und über die Elektronikeinheit 7 (hier beispielhaft anhand der zwei Leiterplatten 7a und 7b dargestellt). Eine derartige Anordnung, bzw. eine Stromschleife wie die Stromschleife 10a, kann einerseits nachteilig in Bezug auf die elektromagnetische Verträglichkeit des Feldgeräts 1 sein. Im Falle eines hochfrequenten Anregesignals stellt das Feldgerät gemäß Fig.2a eine Störquelle aufgrund von Emissionen elektromagnetischer Wellen dar.

Im Unterschied zu Fig. 2a umfasst das in Fig. 2b dargestellte Feldgerät 1 bei ansonsten gleichem Aufbau ein erfindungsgemäßes Koppelelement 11. Gleiche Bezugszeichen werden deshalb an dieser Stelle nicht erneut erläutert. Das Koppelelement 11 bewirkt, dass das Anregesignal bzw. Antwortsignal anstelle der Stromschleife 10a eine wesentliche kürzere Stromschleife 10b durchläuft. Zum einen erhöht sich durch die Verwendung des Koppelelements 11 vorteilhaft die elektromagnetische Verträglichkeit des Feldgeräts, insbesondere in Bezug auf die Emission elektromagnetischer Wellen. Ein weiterer erheblicher durch das Koppelelement 11 bewirkter Vorteil betrifft die verschiedenen Signalwege innerhalb des Feldgeräts 1. Während das Antwortsignal, also das eigentliche Messsignal, über das Koppelelement 11 an die Elektronikeinheit 7 zurückgeführt wird, erfolgt die Versorgung des Feldgeräts über die Versorgungsleitungen 12. Umfasst die Elektronikeinheit 7 zumindest ein Eingangsfilter [nicht gezeigt], können Störsignalanteile, welche über die Versorgungsleitungen 12 in das Feldgerät 1 einkoppeln können, reduziert oder sogar eliminiert werden. In diesem Falle können die Signalwege vorteilhaft in einen Messkreis entlang der Stromschleife 10b und in einen Versorgungs-/Kommunikationskreis entlang der Versorgungsleitungen 12 getrennt werden. Die Verwendung zumindest eines Eingangsfilters beeinträchtigt das eigentliche Messsignal nicht.

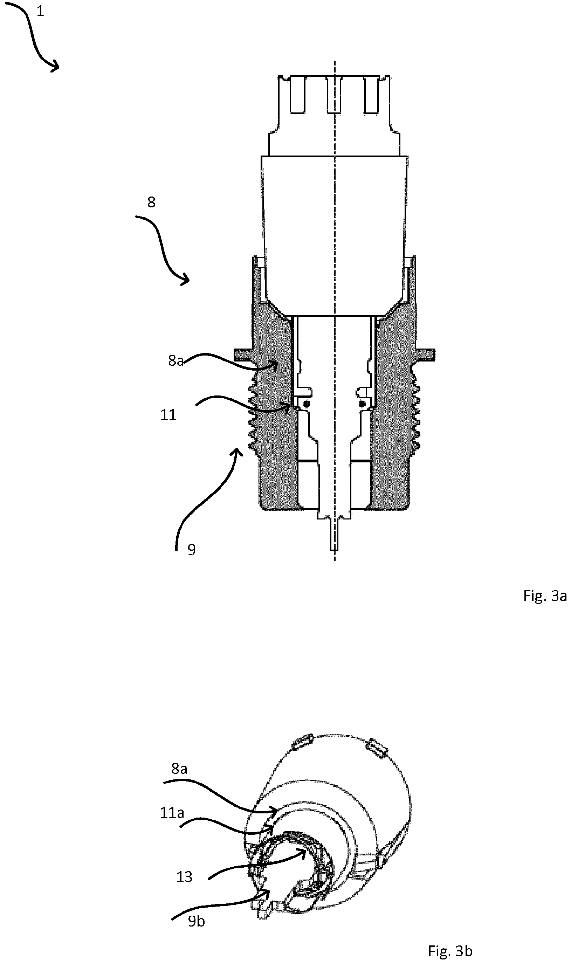

Eine bevorzugte Ausgestaltung eines erfindungsgemäßen Koppelelements 11 ist in Fig. 3 gezeigt. Während Fig. 3a ein kapazitives Feldgerät 1 mit dem Koppelelement 11 in einer Schnittdarstellung zeigt, ist eine detailreichere Ansicht des Koppelelements 11 aus der perspektivischen Zeichnung in Fig. 3b zu entnehmen. Das Gehäuse 8 des Feldgeräts 1 ist zumindest in einem zumindest teilweise den Koppelbereich 8a des Gehäuses definierenden Teilabschnitt zylinderförmig ausgestaltet. Das Koppelelement 11 ist ebenfalls in einem Teilabschnitt zylinderförmig ausgestaltet, welcher zumindest teilweise dessen Koppelbereich 11a definiert, und von den Dimensionen an das Gehäuse 8 angepasst ist. Das Koppelement 11 ist im Wesentlichen passgenau in das Gehäuse 8 des Feldgeräts 1 einbringbar, so, dass sich die beiden Koppelbereiche 8a und 11a zumindest zeitweise und teilweise berühren und einen elektrischen Kontakt ausbilden. Andernfalls bilden die beiden Koppelbereiche 8a und 11a ein Kondensatorelement in Form eines Zylinderkondensators aus, über welches eine kapazitive Kopplung zwischen dem Gehäuse 8 und dem Koppelement 11 bewirkt wird. Die kapazitive Kopplung wächst einerseits mit der Frequenz des Anregesignals und andererseits mit den Flächen der beiden Koppelbereiche 8a und 11a. Daraus ergibt sich, dass die Dimensionen des Koppelelements 11 umso kleiner gewählt werden können, je größer die Frequenz des Anregesignals ist.

Das Koppelelement 11 weist ferner eine Kontaktierungseinheit 13 zur elektrischen Kontaktierung des mit einer Leiterplatte 9b der Elektronikeinheit 7 auf. Für diese Ausgestaltung besteht stets eine konduktive Verbindung zwischen dem Koppelelement 11 und der Leiterplatte 9b. Dagegen besteht zwischen dem Koppelelement 11 und dem Gehäuse zeitweise, insbesondere im Falle, dass sich die beiden Koppelbereiche 11a und 8a berühren, eine flächige elektrische Verbindung. Verschiedene Einflüsse können jedoch bewirken, dass die Berührung der beiden Koppelbereiche 11a und 8a nicht mehr vorhanden ist. Dies können beispielsweise gewisse Fertigungstoleranzen bei der Herstellung des Koppelelements 11 oder des Gehäuses 8 sein. Eine fehlende Berührung kann sich aber auch durch das Vergießen der einzelnen Komponenten innerhalb des Gehäuses 8 ergeben. Außerdem können unterschiedliche Ausdehnungskoeffizienten der einzelnen Komponenten im Falle des Auftretens größerer Temperaturgradienten dazu führen, dass sich das Koppelelement 11 und das Gehäuse 8 nicht mehr oder nicht mehr vollständig berühren. In diesem Falle besteht zwischen den beiden Komponenten, welche beide zumindest in den Koppelbereichen 11a und 8a aus einem elektrisch leitfähigen Material gefertigt sind, eine kapazitive Kopplung, welche garantiert, dass das Wechselstromsignal weiterhin die kurze Stromschleife 10b durchläuft.

### Bezugszeichen

| | |
|---|---|
| 1 | kapazitives Füllstandsmessgerät |
| 2 | Sensoreinheit |
| 3 | Behälter |
| 3a | Prozessanschluss des Behälters |
| 4 | Medium |
| 5 | Sensorelektrode |
| 6 | Guardelektrode |
| 7 | Elektronikeinheit, 7a,7b Leiterplatten |
| 8 | Gehäuse des Feldgeräts |
| 8a | Koppelbereich des Gehäuses |
| 9 | Prozessadapter |
| 10a, 10b | Stromschleifen |
| 11 | Koppelelement |
| 11a | Koppelbereich des Koppelelements |
| 12 | Versorgungsleitungen |
| 13 | Kontaktierungseinheit |

## Patentansprüche

1. Vorrichtung (1) zur kapazitiven Bestimmung und/oder Überwachung eines Füllstandes, einer elektrischen Leitfähigkeit oder einer Permittivität eines Mediums (4) in einem Behälter (3),
umfassend zumindest eine Sensoreinheit (2) mit zumindest einer Sensorelektrode (5), ein Gehäuse (8) und eine Elektronikeinheit (7),
wobei die Elektronikeinheit (7) dazu ausgestaltet ist,
- die Sensoreinheit (2) mit einem hochfrequenten Anregesignal zu beaufschlagen,
- von der Sensoreinheit (2) ein Antwortsignal zu empfangen, und
- zumindest aus dem Antwortsignal eine Aussage über den Füllstand des Mediums (4) in dem Behälter (3) zu treffen,
wobei ein Koppelelement (11) vorgesehen ist, welches derart angeordnet und dazu ausgestaltet ist, eine leitfähige Verbindung zwischen zumindest einem Teilbereich des Gehäuses (8a) und zumindest einer Komponente (7b) der Elektronikeinheit (7) in Form eines elektrischen Kontakts herzustellen, oder im Falle, dass der elektrische Kontakt beeinträchtigt oder aufgebrochen ist, eine kapazitive Kopplung zwischen den beiden Komponenten zu bewirken, derart dass die beiden Komponenten zumindest teilweise ein Kondensatorelement ausbilden,
wobei das Koppelelement (11) lösbar im Gehäuse (8) befestigbar ist.
wobei das Koppelelement (11) und das Gehäuse (8) zumindest jeweils in einem Koppelbereich (8a, 11a) so ausgestaltet sind, dass die Geometrien zumindest in diesen Koppelbereichen (8a, 11a) aneinander angepasst, insbesondere komplementär zueinander, sind, und
wobei das Koppelelement (11) passgenau in das Gehäuse (8) einbringbar ist derart, dass sich die Koppelbereiche (8a, 11a) zur Herstellung der leitfähigen Verbindung berühren.

2. Vorrichtung (1) nach Anspruch 1,
wobei das Koppelelement (11) und das Gehäuse (8) zumindest in den beiden Koppelbereichen (8a, 11a) zumindest zeitweise einen elektrisch leitfähigen Kontakt, und zumindest zeitweise ein Kondensatorelement ausbilden.

3. Vorrichtung (1) nach Anspruch 2,
wobei die beiden Koppelbereiche (8a, 11a) so dimensioniert sind, dass im Falle der kapazitiven Kopplung der Blindwiderstand des Koppelelements (11) klein im Vergleich zur Impedanz des Mediums (4) und/oder zur Impedanz einer Isolation der Sensoreinheit (2) ist.

4. Vorrichtung (1) nach zumindest einem der vorhergehenden Ansprüche,
wobei der Koppelbereich (8a) des Gehäuses (8) und der Koppelbereich (11a) des Koppelelements (11) im Wesentlichen zylinderförmig ausgestaltet sind, und wobei zumindest der Koppelbereich (11a) des Koppelelements (11) lösbar innerhalb des Gehäuses (8) einbringbar ist derart, dass die dem Gehäuseinneren zugewandte Oberfläche des Koppelbereichs (8a) des Gehäuses (8) die dem Gehäuseinneren zugewandte Oberfläche des Koppelbereichs (11a) des Koppelelements (11) zumindest teilweise und zeitweise berührt.

5. Vorrichtung (1) nach zumindest einem der vorhergehenden Ansprüche,
wobei das Koppelelement (11) eine Kontaktierungseinheit (13) aufweist, mittels welcher eine, insbesondere lösbare, elektrische Verbindung zwischen dem Koppelelement (11) und der Komponente (7b) der Elektronikeinheit (7) herstellbar ist.

6. Vorrichtung (1) nach Anspruch 5,
wobei die Kontaktierungseinheit (13) mit der Komponente (7b) der Elektronikeinheit (7) mittels einer Steck-, Löt- oder Pressverbindung elektrisch kontaktiert ist,

7. Vorrichtung (1) nach zumindest einem der vorhergehenden Ansprüche,
wobei das Koppelelement (11) aus einem elektrisch leitfähigen Material, insbesondere Kupfer, Zinn, Silber, Gold oder eine Legierung aus zumindest zwei dieser Elemente, hergestellt ist.

8. Vorrichtung (1) nach zumindest einem der vorhergehenden Ansprüche,
wobei die zumindest eine Komponente (7b) der Elektronikeinheit (7) eine Leiterplatte ist.

9. Vorrichtung (1) nach zumindest einem der vorhergehenden Ansprüche,
wobei das Gehäuse (8) einen Prozessadapter (9) aufweist, mittels welchem die Vorrichtung (1) an oder auf dem Behälter (8) befestigbar ist, und welcher Prozessadapter (9) zumindest teilweise mit dem Medium (4) und/oder mit dem Behälter (3) in elektrischem Kontakt ist, wenn die Vorrichtung (1) an oder auf dem Behälter (3) befestigt ist.

10. Vorrichtung nach zumindest einem der vorhergehenden Ansprüche,
wobei die Sensoreinheit (2) zumindest zwei Elektroden (5,6) umfasst.

## Claims

1. Apparatus (1) designed for the capacitive determination and/or monitoring of a level, an electrical conductivity or a permittivity of a medium (4) in a vessel (3), comprising at least a sensor unit (2) with at least a sensor electrode (5), a housing (8) and an electronic unit (7),
wherein the electronic unit (7) is designed to
- supply a high-frequency excitation signal to the sensor unit (2)
- receive a response signal from the sensor unit (2), and
- deduce a statement regarding the level of the medium (4) in the vessel (3) at least from the response signal;
wherein a coupling element (11) is provided, said element being arranged in such a way and designed to establish a conductive connection between at least a subsection of the housing (8a) and at least a component (7b) of the electronic unit (7) in the form of an electrical contact, or in the event that the electrical contact is impaired or interrupted, to bring about a capacitive coupling between the two components, in such a way that the two components at least temporarily form a capacitor element,
wherein the coupling element (11) is secured in the housing (8) in a detachable manner,
wherein the coupling element (11) and the housing (8) are each designed in a coupling area (8a, 11a) in such a way that the geometries are adapted to one another at least in these coupling areas (8a, 11a), particularly in a complementary manner in relation to one another, and
wherein the coupling element (11) can be introduced into the housing (8) in such a tailored manner that the coupling areas (8a, 11a) touch to establish the conductive connection.

2. Apparatus (1) as claimed in Claim 1,
wherein the coupling element (11) and the housing (8) at least temporarily form an electrically conductive contact, and at least temporarily a capacitor element, at least in the two coupling areas (8a, 11a).

3. Apparatus (1) as claimed in Claim 2,
wherein the two coupling areas (8a, 11a) are sized in such a way that, in the case of a capacitive coupling, the reactance of the coupling element (11) is small compared to the impedance of the medium (4) and/or the impedance of an insulation of the sensor unit (2).

4. Apparatus (1) as claimed in at least one of the previous claims,
wherein the coupling area (8a) of the housing (8) and the coupling area (11a) of the coupling element (11) are essentially cylindrical in design, and wherein at least the coupling area (11a) of the coupling element (11) can be introduced in a detachable manner within the housing (8) in such a way that the surface of the coupling area (8a) of the housing (8) facing towards the interior of the housing at least partially and temporarily touches the surface of the coupling area (11a) of the coupling element (11) facing towards the interior of the housing.

5. Apparatus (1) as claimed in at least one of the previous claims,
wherein the coupling element (11) has a contact unit (13) by means of which an electrical connection, particularly a disconnectable electrical connection, can be established between the coupling element (11) and the component (7b) of the electronic unit (7).

6. Apparatus (1) as claimed in Claim 5,
wherein the contact unit (13) is electrically contacted with the component (7b) of the electronic unit (7) by means of a plug-in, solder or compression connection.

7. Apparatus (1) as claimed in at least one of the previous claims,
wherein the coupling element (11) is made from an electrically conductive material, particularly copper, tin, silver or gold or an alloy of at least two of these elements.

8. Apparatus (1) as claimed in at least one of the previous claims,
wherein the at least one component (7b) of the electronic unit (7) is a printed circuit board.

9. Apparatus (1) as claimed in at least one of the previous claims,
wherein the housing (8) comprises a process adapter (9) by means of which the apparatus (1) can be secured to or on the vessel (3), and wherein said process adapter (9) is at least partially in electrical contact with the medium (4) and/or the vessel (3) when the apparatus (1) is secured to or on the vessel (3).

10. Apparatus as claimed in at least one of the previous claims,
wherein the sensor unit (2) comprises at least two electrodes (5, 6).

## Revendications

1. Dispositif (1) destiné à la détermination capacitive et/ou à la surveillance d'un niveau, d'une conductivité électrique ou d'une permittivité d'un produit (4) dans un réservoir (3),
comprenant au moins une unité de capteur (2) avec au moins une électrode de capteur (5), un boîtier (8) et une unité électronique (7),
l'unité électronique (7) étant conçue de telle sorte à
- alimenter l'unité de capteur (2) avec un signal d'excitation haute fréquence
- recevoir de l'unité de capteur (2) un signal de réponse, et
- déduire au moins du signal de réponse une information sur le niveau de produit (4) dans le réservoir ;
dispositif pour lequel est prévu un élément de couplage (11), lequel est disposé et conçu de telle sorte à établir une liaison conductrice entre au moins une zone partielle du boîtier (8a) et au moins un composant (7b) de l'unité électronique (7) sous forme d'un contact électrique ou, dans le cas où le contact électrique est entravé ou interrompu, à générer un couplage capacitif entre les deux composants, de telle sorte que les deux composants forment au moins temporairement un élément de condensateur,
l'élément de couplage (11) étant fixé de manière amovible dans le boîtier (8), l'élément de couplage (11) et le boîtier (8) étant chacun conçus dans une zone de couplage (8a, 11a) de telle sorte que les géométries soient adaptées l'une à l'autre au moins dans ces zones de couplages (8a, 11a), notamment de façon complémentaire l'une par rapport à l'autre, et
l'élément de couplage (11) pouvant être introduit avec précision dans le boîtier (8) de telle sorte que les zones de couplage (8a, 11a) se touchent afin d'établir la liaison conductrice.

2. Dispositif (1) selon la revendication 1,
pour lequel l'élément de couplage (11) et le boîtier (8) forment, au moins dans les deux zones de couplage (8a, 11a), au moins temporairement un contact électriquement conducteur, et au moins temporairement un élément de condensateur.

3. Dispositif (1) selon la revendication 2,
pour lequel les deux zones de couplage (8a, 11a) sont dimensionnées de telle sorte que, dans le cas d'un couplage capacitif, la réactance de l'élément de couplage (11) est faible par rapport à l'impédance du produit (4) et/ou à l'impédance d'une isolation de l'unité de capteur (2).

4. Dispositif (1) selon au moins l'une des revendications précédentes,
pour lequel la zone de couplage (8a) du boîtier (8) et la zone de couplage (11a) de l'élément de couplage (11) sont conçues pour l'essentiel de manière cylindrique, et pour lequel au moins la zone de couplage (11a) de l'élément de couplage (11) peut être introduite de manière amovible dans le boîtier (8) de telle sorte que la surface de la zone de couplage (8a) du boîtier (8) tournée vers l'intérieur du boîtier touche au moins partiellement et temporairement la surface de la zone de couplage (11a) de l'élément de couplage (11) tournée vers l'intérieur du boîtier.

5. Dispositif (1) selon au moins l'une des revendications précédentes,
pour lequel l'élément de couplage (11) présente une unité de contact (13) au moyen de laquelle une connexion électrique, notamment amovible, peut être établie entre l'élément de couplage (11) et le composant (7b) de l'unité électronique (7).

6. Dispositif (1) selon la revendication 5,
pour lequel l'unité de contact (13) est mise en contact électrique avec le composant (7b) de l'unité électronique (7) au moyen d'une connexion enfichable, soudée ou par pression.

7. Dispositif (1) selon au moins l'une des revendications précédentes,
pour lequel l'élément de couplage (11) est constitué d'un matériau électriquement conducteur, notamment de cuivre, d'étain, d'argent, d'or ou d'un alliage d'au moins deux de ces éléments.

8. Dispositif (1) selon au moins l'une des revendications précédentes,
pour lequel l'au moins un composant (7b) de l'unité électronique (7) est une carte de circuit imprimé.

9. Dispositif (1) selon au moins l'une des revendications précédentes,
pour lequel le boîtier (8) comprend un adaptateur de process (9) au moyen duquel le dispositif (1) peut être fixé au ou sur le réservoir (3), et lequel adaptateur de process (9) est au moins partiellement en contact électrique avec le produit (4) et/ou avec le réservoir (3) lorsque le dispositif (1) est fixé au ou sur le réservoir (3).

10. Dispositif selon au moins l'une des revendications précédentes,
pour lequel l'unité de capteur (2) comprend au moins deux électrodes (5, 6).
